# EUROPÄISCHE PATENTSCHRIFT

(11) **EP 3 290 205 B1**
(45) Veröffentlichungstag und Bekanntmachung des Hinweises auf die Patenterteilung: **01.05.2019**
(21) Anmeldenummer: 17197807.5
(22) Anmeldetag: 17.03.2014
(51) Int. Cl.: B32B 27/32, G09F 3/10

(54) **MEHRSCHICHTIGE BLASFOLIE ZUR HERSTELLUNG VON ETIKETTEN**
MULTI-LAYER BLOWN FILM FOR PRODUCING LABELS
FILM SOUFFLÉ MULTICOUCHES POUR LA FABRICATION D'ÉTIQUETTES

(43) Veröffentlichungstag der Anmeldung: 07.03.2018
(62) Teilanmeldung aus: 14160325.8
(73) Patentinhaber: Mondi Gronau GmbH, 48599 Gronau (DE)
(72) Erfinder: DENIS, Norbert, 48619 Heek (DE); KUCKERTZ , Christian, 57462 Olpe (DE); NIEPELT, Ralf, 48599 Gronau (DE)
(74) Vertreter: Kaimann, Benjamin

(56) Entgegenhaltungen:
- EP-A1- 2 578 395
- DE-A1- 10 162 974

## Beschreibung

Die Erfindung betrifft eine mehrschichtige Blasfolie zur Herstellung von Etiketten mit einem durch Coextrusion gebildeten Schichtenaufbau.

Eine mehrschichtige Blasfolie zur Herstellung von Etiketten ist aus DE 10 2007 045 117 A1 bekannt. Der Schichtenaufbau dieser Folie umfasst zwei Außenschichten aus Polyethylen und eine Kernschicht aus einer Polypropylenmischung. Die Polypropylenmischung besteht aus 5 bis 25 Gew.-% Polypropylen-Homopolymeren (PP-H), 5 bis 35 Gew.-% Polypropylen-Random-Copolymeren (PP-RC) und 40 bis 80 Gew.-% Polypropylen-Blockcopolymeren (PP-BC). Charakteristisch für die Kernmischung ist der geringe Anteil an Polypropylen-Homopolymeren, welche die Biegesteifigkeit und Stanzbarkeit des Materials fördern, in Abmischung mit einem großen Anteil an PP-Blockcopolymeren, aus denen Blasfolien mit hohem E-Modul und geringer Trübung gefertigt werden können. Die bekannte Blasfolie ist flexibel und wurde für stark gekrümmte Flächen entwickelt. Für viele Anwendungen wird eine höhere Biegesteifigkeit der Etikettenfolie gewünscht. Auch hinsichtlich der Stanzbarkeit ist die bekannte Folie noch verbesserungsbedürftig.

Aus EP 1 919 706 B1 ist eine mehrschichtige Folie für Verpackungen bekannt, die zwei äußere Schichten aus Polyethylen sowie eine Kernschicht aufweist. Die Kernschicht besteht aus einer Mischung aus Polypropylen und einem Metallocen katalysierten linearen Polyethylen (mLLDPE). Das Propylen ist vorzugsweise ein Homopolymer und weist einen Schmelzflussindex von maximal 4 g/10min (gemessen nach ISO 1133 bei 230°C und 2,16 kg) auf.

Aus DE 101 62 974 A1 ist ein mehrschichtiger Film mit einer PE-Kernschicht sowie zwei äußeren PE-Schichten bekannt.

EP 2 578 395 A1 offenbart eine mehrschichtige Folie zur Herstellung von Etiketten. Der Schichtaufbau sieht eine Kernschicht aus einem Polyolefin sowie zwei außenliegende bedruckbare Deckschichten umfassend ein Polyethylen niedriger Dichte (LDPE). Zwischen den Deckschichten und der Kernschicht ist jeweils eine Zwischenschicht aus einem Polyolefin angeordnet.

Aus der Praxis ist bekannt, dass Polypropylen mit einem höheren Schmelzflussindex als 4,0 g/10min auf herkömmlichen Blasfolienanlagen nicht betriebssicher verarbeitet werden kann, da mit zunehmendem Schmelzflussindex eine stabile Blasfolienextrusion nicht mehr gewährleistet ist.

Vor diesem Hintergrund liegt der Erfindung die Aufgabe zugrunde, eine mehrschichtige Blasfolie zur Herstellung von Etiketten anzugeben, die eine große Biegesteifigkeit aufweist, sich durch gute Stanzeigenschaften auszeichnet und gut bedruckbar ist. Neben diesen Eigenschaften wird auch eine hohe Reißfestigkeit und eine in verschiedenen Richtungen (Produktionsrichtung MD und Querrichtung CD) ausgeglichene Weiterreißfestigkeit angestrebt.

Gegenstand und Lösung dieser Aufgabe ist eine mehrschichtige Blasfolie nach Anspruch 1.

Der Schichtenaufbau der erfindungsgemäßen Blasfolie umfasst zwei Außenschichten aus Polyethylen, eine Kernschicht aus Polyethylen und beidseits der Kernschicht eine Zwischenschicht aus Polypropylen mit einem Schmelzflussindex von mehr als 4,0 g/10min (gemessen nach ISO 1133 bei 230 °C und 2,16 kg). Als Zwischenschichten beidseits der Kernschicht wird vorzugsweise ein Polypropylen-Homopolymer eingesetzt, das einen Schmelzflussindex von 5,0 bis 15 g/10min (ISO 1133 bei 230 °C und 2,16 kg) aufweist. Polypropylen mit einem derartig hohen Schmelzflussindex wird im Stand der Technik vornehmlich als Cast-Folie verarbeitet. Durch die erfindungsgemäße Kombination von Propylenschichten mit einer Kernschicht aus Polyethylen kann die Folienblase bei der Blasfolienextrusion überraschend stabilisiert werden. Es wurde festgestellt, dass die Stabilisierung so ausgeprägt ist, dass auch Polypropylen-Homopolymere als Zwischenschichten verwendet werden können, die aufgrund ihres hohen Schmelzflussindexes von mehr als 4,0 g/10min normalerweise nicht blasfähig sind. Durch die Verwendung von Polypropylen-Homopolymeren mit hohem Schmelzflussindex werden die mechanischen Eigenschaften, die für die Verwendung als Etikettenfolie relevant sind, signifikant verbessert. Aufgrund des großen Schmelzflussindexes ist das Polypropylen besser stanzbar. Ferner zeichnet sich die erfindungsgemäße Blasfolie durch ausgeglichene mechanische Eigenschaften in Produktionsrichtung (MD) und in Querrichtung (CD) aus.

Vorzugsweise besteht die Kernschicht aus einem bimodalen Polyethylen oder einer Mischung aus bimodalen Polyethylenen mit einer Dichte zwischen 0,925 g/cm³ und 0,94 g/cm³. Bevorzugt wird für die Kernschicht bimodales LLDPE, bimodales LMDPE oder eine Mischung daraus verwendet. Bimodales Polyethylen weist zumindest zwei Polyethylenfraktionen auf, die sich in Folge unterschiedlicher Polymerisationsbedingungen hinsichtlich des mittleren Molekulargewichtes und der Molekulargewichtsverteilung unterscheiden. Die Molekulargewichtsverteilung eines bimodalen Polymers ist durch eine Verteilungskurve gekennzeichnet, die zwei Maxima aufweist. Entsprechend der Molekulargewichtsverteilung weist das bimodale Polyethylen beispielsweise optimale Werte hinsichtlich der mechanischen Festigkeit und der Steifigkeit auf. Mittels der aus Polyethylen, insbesondere aus bimodalem Polyethylen, bestehenden Kernschicht kann die Zähigkeit der Coextrusionsfolie und deren Verarbeitbarkeit bei der Blasfolienextrusion günstig beeinflusst werden, ohne die Steifigkeit der Blasfolie wesentlich zu reduzieren. Der Einsatz eines bimodalen LMDPE ist von besonderem Vorteil, weil dadurch vorteilhafte Werte für die Steifigkeit, Zähigkeit und Verarbeitbarkeit miteinander kombiniert werden können.

Überraschenderweise hat sich auch herausgestellt, dass das bimodale Polyethylen (LLDPE/LMDPE) eine ausgezeichnete Schichthaftung direkt auf Polypropylen aufweist. Daher ist eine Haftvermittlerschicht zwischen der Kernschicht und den aus Polypropylen bestehenden Zwischenschichten entbehrlich.

Die aus Polyethylen bestehenden Außenschichten bewirken eine Verbesserung des Glanzes und dienen zur besseren Verankerung einer außenseitigen Vorbehandlung, die für weitere Schritte wie Kleberbeschichtung und Bedruckung notwendig ist. Die Außenschichten bestehen vorzugsweise aus einem unimodalen Polyethylen oder einer Mischung aus unimodalen Polyethylenen. Bevorzugt sind Polyethylene mit einer Dichte zwischen 0,925 und 0,94 g/cm³. Bevorzugt bestehen die Außenschichten aus einem linearen Polyethylen LLDPE, LMDPE oder einer Mischung aus LLDPE und LMDPE, wobei zusätzlich ein Anteil von LDPE enthalten sein kann.

Zwischen der aus Polyethylen bestehenden Außenschicht und der Zwischenschicht aus Polypropylen ist zweckmäßig eine Haftvermittlerschicht angeordnet. Zur Haftvermittlung eignen sich Copolymere aus Propylen und Ethylen.

Die Außenschichten weisen zweckmäßig eine geringe Schichtdicke von weniger als 6 µm auf. Vorzugsweise haben die Außenschichten eine Schichtdicke zwischen 1 µm und 4 µm. Durch die geringe Schichtdicke der Außenschichten verlagert sich das steife Material der aus Polypropylen, vorzugsweise Polypropylen-Homopolymer, bestehenden Zwischenschichten sehr weit nach außen und bewirkt eine deutliche Verbesserung der Biegesteifigkeit.

Die Polypropylen-Zwischenschichten beeinflussen maßgebende mechanische Eigenschaften der Blasfolie. Vorzugsweise weisen die aus Polypropylen bestehenden Zwischenschichten ebenso wie die aus Polyethylen bestehende Kernschicht jeweils eine Schichtdicke zwischen 10 µm und 30 µm auf.

Die Blasfolie kann eine Gesamtdicke zwischen 40 µm und 100 µm aufweisen. Bevorzugt ist eine Gesamtdicke zwischen 50 µm und 80 µm, insbesondere eine Gesamtdicke zwischen 50 µm und 70 µm.

Die einzelnen Schichten der Blasfolie können in üblicher Weise Additive und Zuschlagstoffe enthalten. Hierzu zählen insbesondere Antiblockmittel, Verarbeitungshilfsmittel, Farbmittel und dergleichen. Die erfindungsgemäße Etikettenfolie kann als transparente oder gefärbte Folie gefertigt werden, wobei die aus Polyethylen bestehenden Außenschichten für den Glanz der Folie maßgebend sind. Die aus Polyethylen bestehende Kernschicht und die PP-Zwischenschichten können Farbpigmente enthalten. Sofern UV-Stabilisatoren als Zusätze eingesetzt werden, werden diese vorzugsweise in allen Schichten eingebracht.

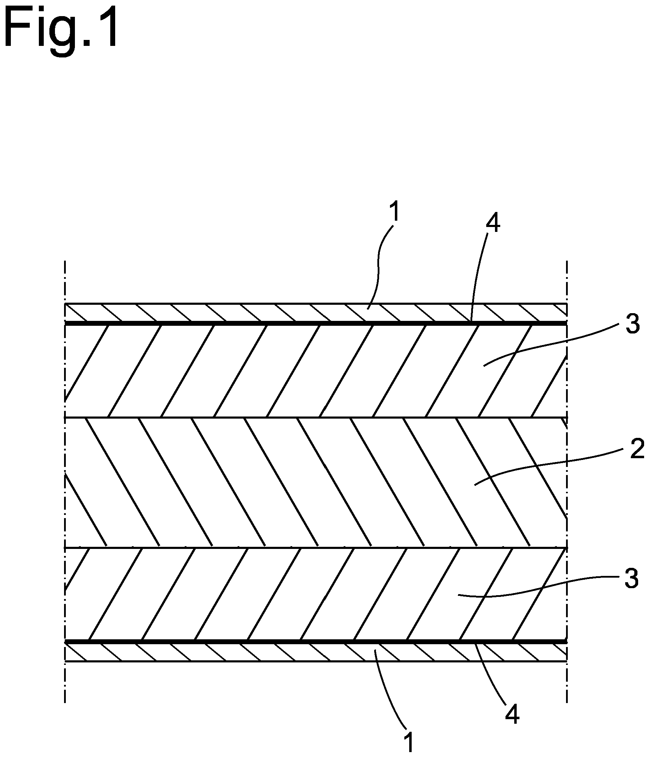

Im Folgenden wird die Erfindung anhand einer lediglich ein Ausführungsbeispiel darstellenden Zeichnung erläutert. Die einzige Figur zeigt schematisch in einer stark vergrößerten Darstellung einen Schnitt durch eine mehrschichtige Etikettenfolie.

Die in der Figur dargestellte erfindungsgemäße Etikettenfolie ist eine mehrschichtige Blasfolie mit einem durch Coextrusion gebildeten Schichtenaufbau. Der Schichtenaufbau umfasst zwei Außenschichten 1 aus Polyethylen, eine Kernschicht 2 aus Polyethylen und beidseits der Kernschicht eine Zwischenschicht 3 aus Polypropylen, welches einen Schmelzflussindex MFI von mehr als 4,0 g/10min (gemessen nach ISO 1133 bei 230 °C und 2,16 kg) aufweist. Vorzugsweise bestehen die Zwischenschichten aus Polypropylenhomopolymer (PP-H), welches einen Schmelzflussindex zwischen 5,0 und 15 g/10min (gemessen nach ISO 1133 bei 230 °C und 2,16 kg) aufweist.

Die Kernschicht 2 besteht aus bimodalem Polyethylen, insbesondere bimodalem LMDPE und/oder bimodalem LLDPE. LMDPE kann eine Dichte zwischen 0,927 und 0,946 g/cm³ und LLDPE eine Dichte zwischen 0,917 g/cm³ und 0,926 g/cm³ aufweisen. Vorzugsweise hat die Kernschicht eine Dichte zwischen 0,925 g/cm³ und 0,94 g/cm³. Durch die Verwendung von bimodalem LMDPE/LLDPE kann die bei der Blasfolienextrusion entstehende Folienblase stabilisiert werden und ist es möglich, Schichten aus Polypropylen zu verarbeiten, die aufgrund eines hohen Schmelzflussindex des Propylens von mehr als 4,0 g/10min allein nicht blasfähig wären.

Die Außenschichten 1 bestehen aus unimodalem Polyethylen, wobei Außenschichten aus linearem Polyethylen, insbesondere LLDPE und/oder LMDPE bevorzugt sind. Neben LLDPE und LMDPE können die Außenschichten 1 noch zusätzliche Anteile von LDPE enthalten. Zwischen der Außenschicht 1 und der Zwischenschicht 3 kann zusätzlich eine Haftvermittlerschicht 4 angeordnet sein. Als Haftvermittler eignen sich Copolymere von Ethylen und Propylen.

Die Außenschichten 1 weisen eine Schichtdicke von weniger als 6 µm auf. Vorzugsweise beträgt die Schichtdicke der Außenschichten 1 µm bis 4 µm.

Die aus Polypropylen bestehenden Zwischenschichten 3 und die aus Polyethylen bestehende Kernschicht 2 weisen jeweils eine Schichtdicke zwischen 10 µm und 30 µm auf. Durch die Festlegung der Schichtdicken und deren Verhältnis zueinander können die mechanischen Eigenschaften der Blasfolie variiert werden.

Die Blasfolie kann eine Gesamtdicke von 40 µm bis 100 µm aufweisen. Vorzugsweise weist die Blasfolie eine Gesamtdicke zwischen 50 µm und 70 µm auf.

Die Schichten der Folie können übliche Zusatzstoffe wie Antiblockmittel, Verarbeitungshilfsmittel und Farbmittel enthalten. Ausführungsbeispiel der Erfindung:
Es wurde eine 66 µm dicke Blasfolie mit einem durch Coextrusion gebildeten Schichtenaufbau hergestellt, der 3 µm dicke Außenschichten aus unimodalem LMDPE, 10 µm dicke Zwischenschichten aus PP-H mit einem Schmelzflussindex (MFI) von 6,5 (gemessen nach ISO 1133 bei 230 °C und 2,16 kg) und eine 24 µm dicke Kernschicht aus bimodalem LMDPE umfasst.

### Vergleichsbeispiel 1:

Das Vergleichsbeispiel 1 betrifft eine dreischichtige Blasfolie mit einem Schichtenaufbau nach dem Stand der Technik aus DE 10 2007 045 117 A1 mit 6 µm dicken Außenschichten aus Polyethylen und einer 48 µm dicken Kernschicht aus einer Polypropylenmischung mit Anteilen eines Polypropylen-Homopolymers (PP-H), eines Polypropylen-Random-Copolymers (PP-RC) und eines Polypropylen-Blockcopolymers (PP-BC).

### Vergleichsbeispiel 2:

Das Vergleichsbeispiel 2 betrifft eine dreischichtige Polyethylenfolie mit Schichten aus LDPE und HDPE, wobei der Anteil von PE-HD in der Kernschicht größer ist als der Anteil von PE-HD in den Außenschichten.
Die mechanischen Eigenschaften der vorgenannten Folien sind in der Tabelle 1 aufgeführt. Gemäß den Messergebnissen weist die erfindungsgemäße Blasfolie ausgewogene mechanische Eigenschaften sowohl in Produktionsrichtung (MD) als auch in Querrichtung (CD) auf. Die erfindungsgemäße Blasfolie zeichnet sich insbesondere durch eine hohe Biegesteifigkeit aus. Obwohl die Foliendicke der erfindungsgemäßen Blasfolie deutlich geringer ist als die Dicke der zum Vergleich herangezogenen Polyethylenfolie (Vergleichsbeispiel VB2) werden ähnliche Biegesteifigkeitswerte erreicht. Auch hinsichtlich des Vergleichsbeispiels VB1 weist die erfindungsgemäße Blasfolie überlegene Biegesteifigkeitswerte auf.

Eine gute Biegesteifigkeit ist für die erfindungemäße Anwendung als Etikettenfolie vorteilhaft. Zur Verwendung als Etikettenfolie wird die Blasfolie bedruckt und mittels eines Klebstoffes auf einem Träger, z. B. einem silikonisierten Papier oder einer Kunststofffolie, aufgebracht. Das aus Etikettenfolie und Träger bestehende Laminat wird im Zuge der weiteren Verarbeitung gestanzt, wobei ein Verschnitt als Stanzgitter von dem Träger abgelöst wird. Auf dem Träger verbleiben separate Etikettenabschnitte. Beim Spenden, also bei der Applikation des Etiketts auf einem zu applizierenden Gegenstand, wird der Träger mit einem kleinen Biegeradius in einem großen Winkel umgelegt, wobei sich der Etikettenabschnitt von dem Träger löst. Die Biegesteifigkeit des Etikettenabschnitts muss hinreichend groß sein, damit der bereits von der Ablösefolie bzw. dem Träger lostgelöste Teil des Etikettenabschnitts frei schwebend bis zum Anlegepunkt an dem zu etikettierenden Gegenstand geschoben werden kann, ohne sich aus der vorgesehenen Bahn herauszubiegen.

Des Weiteren zeichnet sich die erfindungsgemäße Blasfolie durch eine gute Stanzbarkeit aus. Im Vergleich zu einer Polyethylenfolie (Vergleichsbeispiel VB2) ist die erfindungsgemäße Blasfolie wesentlich besser stanzbar.

**Tabelle 1**

| **Typ** | **Dicke µm** | **Zugfestigkeit (N/mm²) MD/CD** | **E-Modul (N/mm²) MD/CD** | **Biegesteifigkeit Verformungskraft (mN) MD / CD** |
|---|---|---|---|---|
| Erfindung | 66 | 49,9 / 29,7 | 1079 / 1069 | 21,2 / 19,9 |
| VB1 | 60 | 60,8 / 30,0 | 1058 / 974 | 11,8 / 12,4 |
| VB2 | 82 | 19,8 / 21,4 | 455 / 530 | 19,9 / 24,6 |

### Glossar

E-Modul: Der E-Modul wird gemäß DIN EN ISO 527 (Ausgabe 2013 -07) ermittelt.

Biegesteifigkeit: Gemessen wird die Verformungskraft F [mN], die beim Biegen einer Folienprobe mit einer vorgewählten Messlänge L [mm] und gleichmäßiger Winkelgeschwindigkeit bis zum eingestellten Biegewinkel α [Grad] entsteht. Die Messungen werden in Anlehnung an DIN 53121 durchgeführt. Die in Tabelle 1 angegebenen Werte wurden für einen Biegewinkel von 30° und eine Messlänge von 10 mm ermittelt.

Zugfestigkeit: Die Zugfestigkeit ist die Spannung, die im Zugversuch aus der maximal erreichten Zugkraft bezogen auf den ursprünglichen Querschnitt der Probe errechnet wird. Die Zugfestigkeit wird gemäß DIN EN ISO 527 (Ausgabe 2003 - 07) ermittelt.

## Patentansprüche

1. Mehrschichtige Blasfolie zur Herstellung von Etiketten mit einem durch Coextrusion gebildeten Schichtenaufbau, der zwei Außenschichten aus Polyethylen, eine Kernschicht aus Polyethylen und beidseits der Kernschicht eine Zwischenschicht aus Polypropylen mit einem Schmelzflussindex (MFI) von mehr als 4,0 g/10 min (gemessen nach ISO 1133 bei 230°C und 2,16 kg) aufweist.

2. Blasfolie nach Anspruch 1, **dadurch gekennzeichnet, dass** das Polypropylen der Zwischenschichten einen Schmelzflussindex (MFI) zwischen 5,0 und 15 g/10 min (gemessen nach ISO 1133 bei 230°C und 2,16 kg) aufweist.

3. Blasfolie nach Anspruch 1 oder 2, **dadurch gekennzeichnet, dass** die Kernschicht ein bimodales Polyethylen oder eine Mischung aus bimodalen Polyethylenen mit einer Dichte zwischen 0,925 g/cm³ und 0,94 g/cm³ aufweist.

4. Blasfolie nach einem der Ansprüche 1 bis 3, **dadurch gekennzeichnet, dass** die Außenschichten aus einem unimodalen Polyethylen oder einer Mischung aus unimodalen Polyethylenen mit einer Dichte zwischen 0,925 g/cm³ und 0,94 g/cm³ bestehen.

5. Blasfolie nach Anspruch 4, **dadurch gekennzeichnet, dass** die Außenschichten aus einem linearen Polyethylen oder einer Mischung aus LLDPE und LMDPE bestehen.

6. Blasfolie nach einem der Ansprüche 1 bis 5, **dadurch gekennzeichnet, dass** zwischen der Außenschicht und der Zwischenschicht eine Haftvermittlerschicht angeordnet ist.

7. Blasfolie nach einem der Ansprüche 1 bis 6, **dadurch gekennzeichnet, dass** die Außenschichten eine Schichtdicke von weniger als 6 µm, vorzugsweise eine Schichtfoliendicke von 1 bis 4 µm, aufweisen.

8. Blasfolie nach einem der Ansprüche 1 bis 7, **dadurch gekennzeichnet, dass** die Polypropylen-Zwischenschichten und die aus Polyethylen bestehende Kernschicht jeweils eine Schichtdicke zwischen 10 µm und 30 µm aufweisen.

9. Blasfolie nach einem der Ansprüche 1 bis 8, **dadurch gekennzeichnet, dass** die Blasfolie eine Gesamtdicke zwischen 40 µm und 100 µm, insbesondere eine Gesamtdicke zwischen 50 µm und 80 µm, und vorzugsweise eine Gesamtdicke zwischen 50 µm und 70 µm aufweist.

## Claims

1. A multilayer blown film for producing labels, having a layer construction formed by coextrusion, comprising two outer layers of polyethylene, a core layer of polyethylene and, on either side of the core layer, an interlayer of polypropylene with a melt flow index (MFI) of more than 4,0 g/10 min (measured according to ISO 1133 at 230°C and 2.16 kg).

2. The blown film according to claim 1, **characterized in that** the polypropylene of the interlayers has a melt flow index (MFI) between 5.0 and 15 g/10 min (measured according to ISO 1133 at 230°C and 2.16 kg).

3. The blown film according to claim 1 or 2, **characterized in that** the core layer comprises a bimodal polyethylene or of a mixture of bimodal polyethylenes having a density of between 0.925 g/cm³ and 0.94 g/cm³.

4. The blown film according to one of claims 1 to 3, **characterized in that** the outer layers consist of a unimodal polyethylene or of a mixture of unimodal polyethylenes having a density of between 0.925 g/cm³ and 0.94 g/cm³.

5. The blown film according to claim 4, **characterized in that** the outer layers consist of a linear polyethylene or a mixture of LLDPE and LMDPE.

6. The blown film according to one of claims 1 to 5, **characterized in that** an adhesion promoter layer is disposed between the outer layer and the interlayer.

7. The blown film according to one of claims 1 to 6, **characterized in that** the outer layers have a layer thickness of less than 6 µm, preferably a layer film thickness of 1 to 4 µm.

8. The blown film according to one of claims 1 to 7, **characterized in that** the polypropylene interlayers and the core layer of polyethylene each have a thickness of between 10 µm and 30 µm.

9. The blown film according to one of claims 1 to 8, **characterized in that** the blown film has a total thickness of between 40 µm and 100 µm, in particular a total thickness of between 50 µm and 80 µm, and preferably a total thickness of between 50 µm and 70 µm.

## Revendications

1. Film soufflé multi-couches pour la fabrication d'étiquettes avec une structure en couches formée par coextrusion qui présente deux couches extérieures en polyéthylène, une couche de noyau en polyéthylène et de chaque côté de la couche de noyau, une couche intermédiaire en polypropylène avec un indice de fusion complète (MFI) supérieur à 4 g/10 min (mesuré selon la norme ISO 1133 à 230°C et 2,16 kg).

2. Film soufflé selon la revendication 1, **caractérisé en ce que** le polypropylène des couches intermédiaires présente un indice de fusion complète (MFI) entre 5 et 15 g/10 min (mesuré selon la norme ISO 1133 à 230°C et 2,16 kg).

3. Film soufflé selon la revendication 1 ou 2, **caractérisé en ce que** la couche de noyau présente un polyéthylène bimodal ou un mélange de polyéthylène bimodal avec une densité entre 0,925 g/cm³ et 0,94 g/cm³.

4. Film soufflé selon l'une des revendications 1 à 3, **caractérisé en ce que** les couches extérieures sont composées d'un polyéthylène unimodal ou d'un mélange de polyéthylène unimodal avec une densité entre 0,925 g/cm³ et 0,94 g/cm³.

5. Film soufflé selon la revendication 4, **caractérisé en ce que** les couches extérieures sont composées d'un polyéthylène linéaire ou d'un mélange de LLDPE et de LMDPE.

6. Film soufflé selon l'une des revendications 1 à 5, **caractérisé en ce qu'**une couche d'agent d'accrochage est disposée entre la couche extérieure et la couche intermédiaire.

7. Film soufflé selon l'une des revendications 1 à 6, **caractérisé en ce que** les couches extérieures présentent une épaisseur de couche inférieure à 6 µm, de préférence une épaisseur de film de couche de 1 à 4 µm.

8. Film soufflé selon l'une des revendications 1 à 7, **caractérisé en ce que** les couches intermédiaires de polypropylène et la couche de noyau composée de polyéthylène présentent respectivement une épaisseur de couche entre 10 µm et 30 µm.

9. Film soufflé selon l'une des revendications 1 à 8, **caractérisé en ce que** le film soufflé présente une épaisseur totale entre 40 µm et 100 µm, en particulier une épaisseur totale entre 50 µm et 80 µm, et de préférence une épaisseur totale entre 50 µm et 70 µm.
